(19) Europäisches Patentamt
European Patent Office
Office européen des brevets

(11) **EP 1 831 649 B1**

(12) **EUROPÄISCHE PATENTSCHRIFT**

(45) Veröffentlichungstag und Bekanntmachung des Hinweises auf die Patenterteilung:
**31.03.2010  Patentblatt 2010/13**

(21) Anmeldenummer: **05792205.6**

(22) Anmeldetag: **26.08.2005**

(51) Int Cl.:
**G01F 1/66** $^{(2006.01)}$

(86) Internationale Anmeldenummer:
**PCT/EP2005/054208**

(87) Internationale Veröffentlichungsnummer:
**WO 2006/066982 (29.06.2006 Gazette 2006/26)**

(54) **ULTRASCHALL-DURCHFLUSSMESSER MIT DRUCKSENSOR**

ULTRASONIC FLOWMETER HAVING A PRESSURE SENSOR

DEBITMETRE A ULTRASONS ET PROCEDE DE MESURE DE DEBIT PAR ULTRASONS

(84) Benannte Vertragsstaaten:
**DE FR**

(30) Priorität: **21.12.2004  DE 102004061404**

(43) Veröffentlichungstag der Anmeldung:
**12.09.2007  Patentblatt 2007/37**

(73) Patentinhaber: **Robert Bosch GmbH**
**70442 Stuttgart (DE)**

(72) Erfinder:
• **HECHT, Hans**
**70825 Korntal-Muenchingen (DE)**
• **MUELLER, Roland**
**71711 Steinheim (DE)**
• **KONZELMANN, Uwe**
**71679 Asperg (DE)**
• **LANG, Tobias**
**70197 Stuttgart (DE)**
• **RADWAN, Sami**
**70372 Stuttgart (DE)**

(56) Entgegenhaltungen:
**EP-A- 0 477 418      EP-A- 1 094 305**
**DE-A1- 19 713 526**

EP 1 831 649 B1

**Beschreibung**

Technisches Gebiet

Zur Messung des Durchflusses eines Fluids, insbesondere eines Gases, beispielsweise von Luft, durch einen Strömungskanal mittels Ultraschall werden wenigstens zwei Ultraschallwandler zur Aussendung und zum Empfang von Ultraschallwellenpaketen in Strömungsrichtung versetzt angeordnet, so dass in einem Elektronikteil Ultraschalllaufzeiten durch das strömende Fluid von einem der Ultraschallwandler zum anderen und umgekehrt bestimmbar sind. Aus den gemessenen Signalwerten der Laufzeiten können in Verbindung mit geometrischen Größen der Messanordnung die Schallgeschwindigkeit im Fluid und die mittlere Strömungsgeschwindigkeit des Fluids berechnet werden.

Stand der Technik

Beispielsweise aus dem Dokument EP 0 477 418 A1 ist ein Ultraschall-Durchflussmesser geeignet zum Einbau in ein Messrohr, durch das ein Fluid strömt, insbesondere zur Lufünassenmessung in einem Kraftfahrzeugmotor, bekannt. Zwei Ultraschallwandler arbeiten abwechselnd als Sende- oder Empfangswandler, wobei die ausgesendeten Ultraschallwellen über eine Reflektoranordnung entlang eines das Messrohr durchlaufenden Messweges zwischen den Ultraschallwandlern laufen. Die einzelnen Baugruppen sind, vorzugsweise mit einer Betriebs- und Messelektronikeinheit, auf einer Trägerplatte integriert als Einbaueinheit ausgeführt, die in einer Aufnahmeöffnung des Messrohres abgedichtet montierbar ist.

Darstellung der Erfindung

Erfindungsgemäß weist ein Ultraschall-Durchflussmesser wenigstens zwei in einem von einem Fluid durchflossenen Strömungskanal in Strömungsrichtung versetzt angeordnete Ultraschallwandler auf, die sich gegenseitig abwechselnd oder gleichzeitig Ultraschallsignale oder Ultraschallwellenpakete zusenden, um die Strömungsrate des Fluids oder Mediums, insbesondere gasförmig, zu messen. In einem Elektronikteil sind die Ultraschalllaufzeiten von seinem der Ultraschallwandler zum anderen und umgekehrt entlang eines Weges durch das strömende Fluid im Strömungskanal bestimmbar. Dem Strömungskanal, genauer dem Raumbereich des Strömungskanals, in dem die Ultraschalllaufzeiten gemessen werden, ist ein Drucksensor zur Bestimmung des Druckes im Strömungskanal zugeordnet. Der Drucksensor ist derart angeordnet, dass der Druck im Strömungskanal, insbesondere im Bereich, in welchem sich die Ultraschallwellenpakete ausbreiten, also die Strömungsrate, der Massenstrom oder der Teilchenstrom bestimmt wird, gemessen wird. Der Ultraschall-Durchflussmesser ist als Steckfühlereinheit ausgeführt und weist ein kompaktes Aufnahmeteil auf, in dem die wenigstens zwei Ultraschallwandler und der Drucksensor integriert sind, wobei der Drucksensor in einem inneren Bereich des kompakten Aufnahmeteils liegt. Auf den Drucksensor kann mittels eines Kanals oder einer Bohrung der im Strömungskanal herrschende Druck übertragen werden, so dass näherungsweise die Dichte des strömenden Fluids ermittelbar ist. Der. Ultraschall-Durchflussmesser kann auch als Ultraschall-Strömungssensor bezeichnet werden.

Der erfindungsgemäße Ultraschall-Durchflussmesser kann in vorteilhafter Weise zur genauen Erfassung der einströmenden Luft in der Ansaugung eines Kraftfahrzeugverbrennungsmotors eingesetzt werden, um Messwerte für eine möglichst genaue Motorsteuerung zu bestimmen.

Ein weiterer Vorteil des zugeordneten, angeordneten beziehungsweise integrierten Drucksensors ist die Möglichkeit, den ermittelten Druckwert bereits im Elektronikteil oder der Auswerteeinheit des Ultraschäll-Durchflussmessers mit den ermittelten Differenzlaufzeiten zwischen den beiden Senderichtungen zwischen den wenigstens zwei Ultraschallwandlern zu multiplizieren. Die auf diese Weise ermittelte Messgröße ist eine gute Näherung für den Massenstrom beziehungsweise den Teilchenstrom in der Strömung des Fluids, welches den Strömungskanal durchfließt.

Aufgrund der weitgehend linearen Kennlinie des erfindungsgemäßen Ultraschall-Durchflussmessers kann dieser und das Verfahren der integrierten oder simultanen Messung und Verrechnung der gemessenen Signale der Ultraschalllaufzeiten und des Druckes besonderes vorteilhaft auch bei pulsierenden Strömungen eingesetzt werden: Bereits im Elektronikteil kann die aus den Messsignalen ermittelte Messgröße für den Massenstrom einer Tiefpassfilterung, welche eine Mittelung bewirkt, unterzogen und dann mit reduzierter Bandbreite weiter übertragen werden, ohne dass hierdurch die Messgenauigkeit reduziert wird.

Durch eine zurückgezogene Position des Drucksensors, der mit dem Strömungskanal durch einen Kanal oder eine Bohrung verbunden ist, wird der Drucksensor in vorteilhafter Weise vor Verschmutzungen geschützt.

Zeichnung

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:

Figur 1 eine schematische Darstellung einer geläufigen Messanordnung für die Ultraschalllaufzeiten durch das strömende Fluid im erfindungsgemäßen Ultraschall-Durchflussmesser,

Figur 2 eine Darstellung des inneren Aufbaus des Ultraschall-Durchflussmessers, welche nur zur Erläuterung dient und kein erfindungsgemäßes Ausführungsbeispiel zeigt,

Figur 3 eine Ausführungsform des erfindungsgemäßen Ultraschall-Durchflussmessers, welche als Steckfühlereinheit ausgeprägt ist, und

Figur 4 einen Querschnitt durch einen Strömungskanal, in welchem die Ausführungsform des erfindungsgemäßen Ultraschall-Durchflussmessers gemäß Figur 3 montiert ist.

Ausführungsvarianten

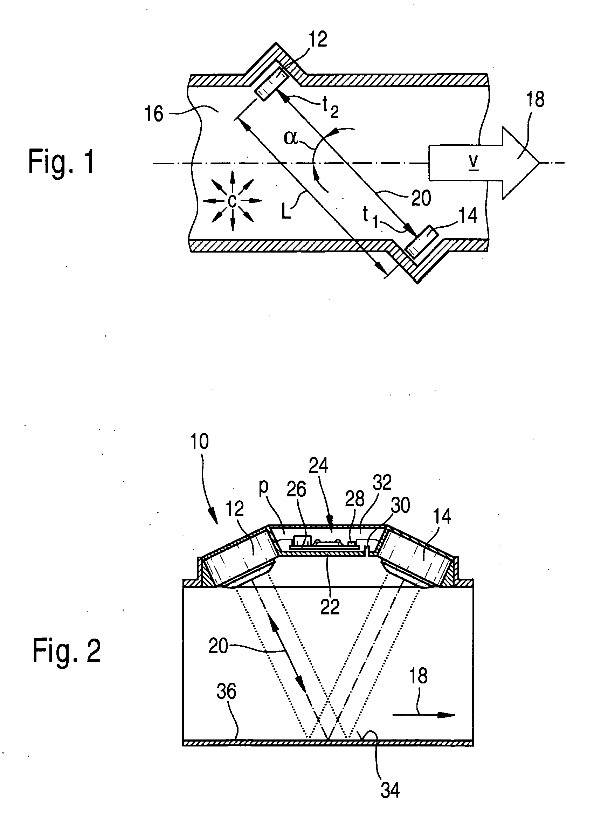

Die Figur zeigt eine schematische Darstellung einer geläufigen Messanordnung für die Ultraschalllaufzeiten durch das strömende Fluid im erfindungsgemäßen Ultraschall-Durchflussmesser. Bevor eine Anzahl von besonderen Vorteilen und vorteilhaften Ausführungen des erfindungsgemäßen Ultraschall-Durchflussmessers beschrieben werden, soll zunächst auf die bereits aus dem Stand der Technik bekannte Messanordnung für die Ultraschalllaufzeiten als solche eingegangen werden: In einem Strömungskanal 16, hier in Figur 1 in Form eines Rohres, sind ein erster und ein zweiter Ultraschallwandler 12,14 versetzt zueinander in Strömungsrichtung 18 angebracht. Anders ausgedrückt, der gerste Ultraschallwandler 12 liegt stromaufwärts, und der zweite Ultraschallwandler 14 liegt stromabwärts. Der Strömungskanal 16 wird von einem Fluid, insbesondere einem Gas, einem Gasgemisch wie beispielsweise Luft, in Strömungsrichtung 18 mit Geschwindigkeit v durchströmt. Das Fluid hat eine Schallgeschwindigkeit c. Die zwei Ultraschallwandler 12,14 senden sich abwechselnd oder gleichzeitig Ultraschallwellenpakete entlang eines Messweges 20 durch das strömende Fluid mit Weglänge L zu. Der Messweg 20 verläuft wenigstens in einer Projektion parallel beziehungsweise antiparallel zur Strömungsrichtung 18. Hier in Figur 1 schließen Messweg 20 und Strömungsrichtung 18 einen Winkel $\alpha$ ein. Es werden die Ultraschalllaufzeiten $t_1$ vom ersten Ultraschallwandler 12 zum zweiten Ultraschallwandler 14 und $t_2$ vom zweiten Ultraschallwandler 14 zum ersten Ultraschallwandler 12 gemessen. Die Ultraschalllaufzeiten $t_1$ und $t_2$ unterscheiden sich geringfügig in Vergleich zum Betrag ihres arithmetischen Mittels aufgrund der Bewegung des Fluids in Strömungsrichtung 18.

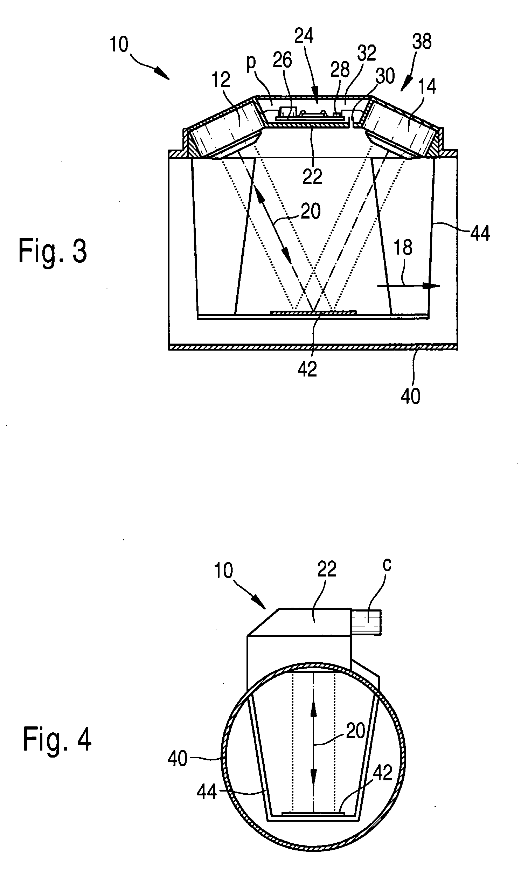

Erfindungsgemäß wird nun zusätzlich im Bereich des Strömungskanals 16, in welchem die Ultraschalllaufzeiten bestimmt werden, der Druck des Fluids gemessen (nicht näher in Figur 1 gezeigt, siehe Figuren 2 bis 4). Dadurch stehen innerhalb eines Elektronikteils oder einer Auswerteeinheit - das Elektronikteil kann auch entfernt vom Ort der Messung liegen - für eine vorteilhafte kompakte oder integrierte Anordnung siehe Figuren 2 und 3 - Messwerte für die Laufzeitdifferenz $\Delta t = t_1 - t_2$, die Laufzeitsumme $\Sigma t = t_1 + t_2$ und den Druck p zur Verfügung. Mit der abkürzenden Schreibweise eines Korrekturfaktors $s = 1 - (\Delta t / \Sigma t)^2$ ergeben sich nach kurzer Rechnung die folgenden Zusammenhängt für die Schallgeschwindigkeit c im Fluid.

$$c = 2L \frac{1}{\Sigma t} \frac{1}{s} \qquad (1)$$

und die mittlere Strömungsgeschwindigkeit v

$$v = \frac{2L}{\cos \alpha} \frac{\Delta t}{(\Sigma t)^2} \frac{1}{s} \qquad (2)$$

Der zum Massenstrom proportionale Teilchenstrom $\dot{n} = dn/dV \, dV/dt$ kann mit Hilfe der allgemeinen Gasgleichung $pV = nkT$; wobei V das Volumen, n die Teilchenzahl, **k** die Boltzmannkonstante und T die Temperatur ist, und der Proportionalität $v \propto dV/dt$ zwischen der Strömungsgeschwindigkeit v und der Volumenstromrate dV/dt auch dargestellt werden als

$$\dot{n} \propto v\left(\frac{p}{T}\right) . \qquad\qquad (3)$$

Mit dem Zusammenhang $c^2 = \kappa RT$, wobei $\kappa$ der Adiabatenexponent ist, erhält man dann

$$\dot{n} \propto p \cdot \Delta t \cdot g , \qquad\qquad (4)$$

wobei g= $\kappa s$ ein Korrekturfaktor ist, der als Funktion von v, T und der relativen Luftfeuchtigkeit dargestellt werden kann. In vorteilhafter Weise kann der Korrekturfaktor g als 1 gesetzt (oder vernachlässigt) werden: Bei der Ermittlung des Teilchenstroms beziehungsweise des Massenstroms wird nur ein gewisser Fehler gemacht, der mit wachsender Temperatur und Luftfeuchtigkeit zunimmt, aber in vielen Anwendungen keine wesentliche Rolle spielt. Mit anderen Worten, in guter Näherung ist das Produkt aus Druck und Laufzeitdifferenz proportional zum Teilchenstrom und daher ein Maß für den wiederum zum Teilchenstrom proportionalen Massenstrom.

Werden der gemessene Druck p und die Differenzlaufzeit $\Delta t$ innerhalb des Elektronikteils (auch Auswerteeinheit) jeweils über einen linearen Zusammenhang als elektrisches Signal repräsentiert, können die beiden Signale einer Multiplikation entsprechend miteinander zu einem resultierenden Signal (in einer Multiplikationseinheit des Elektronikteils nicht zeichnerisch dargestellt) verarbeitet werden, welches näherungsweise den Massenstroms darstellt. Dieses Signal, wenn es sich auf den Massenstrom in der Ansaugung eines Kraftfahrzeugverbrennungsmotors bezieht, kann in vorteilhafter Weise für dessen Steuerung oder Regelung eingesetzt werden.

In Figur 2 ist ein Ultraschall-Durchflussmesser 10 gezeigt. In einem Strömungskanal 16, der hier als Strömungsrohr darstellt ist, sind ein erster und ein zweiter Ultraschallwandler 12, 14 in Strömungsrichtung 18 versetzt angeordnet. Die Ultraschallwandler 12,14 senden sich gegenseitig Ultraschallsignale, insbesondere Ultraschallwellenpakete, zu. Die Ultraschallwandler 12,14, sind sowohl zum Senden als auch zum Empfangen geeignet, können also sowohl elektrische Signale in Ultraschall als auch Ultraschall in elektrische Signale wandeln. Jeder der Ultraschallwandler 12,14 dient nach dem Senden eines Ultraschallwellenpaketes dazu, ein vom jeweils anderen Ultraschallwandler 12,14 kommendes Ultraschallwellenpaket aufzufangen. Einer Geometrie, wie sie in der Figur 1 gezeigt ist, entsprechend, können die Ultraschallwellenpakete direkt von einem Ultraschallwandler 12,14 zum anderen durch das strömende Fluid laufen. Die Ultraschallwellenpakete werden an einer Ultraschallwellen reflektierenden Fläche 34 an der Rohrinnenwand 36 des Strömungskanals 16 gespiegelt; die Ultraschallwandler 12,14 liegen auf einer Seite des Strömungskanals 16. Der Messweg 20, welchen die Ultraschallwellenpakete durchlaufen, verläuft dabei nicht senkrecht zur Strömungsrichtung 18. Obschon der Messweg 20 prinzipiell parallel beziehungsweise antiparallel zur Strömungsrichtung 18 verlaufen kann, ist vorgesehen, dass der Messweg 20 wenigstens abschnittsweise unter einem Winkel gegenüber der Strömungsrichtung 18 geneigt verläuft. Der Messweg 20 kann auch eine Anzahl von Abschnitten aufweisen, welche einen unterschiedlichen Winkel zur Strömungsrichtung ,18 einschließen. In der Figur 2 verläuft der Messweg 20, wie durch die gestrichelte Linie angedeutet, V-förmig mit zwei Abschnitten, welche spiegelsymmetrisch gegenüber einer Ebene eines Strömungskanalquerschnitts geneigt zur Strömungsrichtung liegen. Die gepunktete Linien stellen schematisch die Ausdehnung der Ultraschallwellenpakete in lateraler Richtung gegenüber ihrer Ausbreitungsrichtung dar.

In Figur 2 sind die zwei Ultraschallwandler in einem kompakten Aufnahmeteil integriert. Zwischen dem ersten (stromaufwärts liegend) und dem zweiten (stromabwärts liegend) Ultraschallwandler 12,14 ist ebenfalls am kompakten Aufnahmeteil 22 ein Elektronikteil 24 aufgenommen. Das Elektronikteil 24 dient unter anderem zur Erzeugung der elektrischen Signale für die Ultraschallwandler 12,14, so dass Ultraschallwellenpakete generiert werden, zur Verarbeitung der entstehenden elektrischen Signale aufgrund von empfangenen Ultraschallwellenpaketen, zur Laufzeitmessung der Ultraschallwellenpakete (Laufzeit - wenigstens in Projektion - mit der Strömungsrichtung 18 und Laufzeit - wenigstens in Projektion- entgegen der Strömungsrichtung 18) und zur Verarbeitung der Messwerte zu einem elektrischen Signal, welches den Massenstrom repräsentiert. Durch die in Strömungsrichtung 18 versetzte Anordnung der Ultraschallwandler 12,14 unterscheiden sich die Laufzeiten vom ersten zum zweiten und umgekehrt in Abhängigkeit der Strömungsgeschwindigkeit v. Das Elektronikteil 24 weist einen Schaltungsträger 26 auf, der einen Drucksensor 28 (oder einen Druckaufnehmer) umfasst. Am Schaltungsträger 26 sind auch andere, bevorzugt alle benötigten Schaltungsbauteile des Ultraschall-Durchflussmessers 10 angebracht beziehungsweise angeschlossen.

Das kompakte Aufnahmeteil weist einen inneren Bereich 32, in welchem der Schaltungsträger 26 mit dem Drucksensor 28 liegen, auf, wobei der innere Bereich 32 durch einen Kanal 30, hier in dieser Ausführungsform eine Bohrung, mit dem Strömungskanal 16 verbunden ist. Wenn der Drucksensor 28 den Druck im inneren Bereich 32. misst, wird dadurch der Druck im Strömungskanal 16 bestimmt. Der Kanal 30 kann, wie hier in Figur 2 gezeigt, ein offener Kanal 30 sein oder alternativ dazu ein mit einer beweglichen Membran verschlossener Kanal 30 (nicht zeichnerisch dargestellt) sein, so dass zwar der Druck in den inneren Bereich 32 weitergeleitet wird, aber Verschmutzungen vom Elektronikteil 24 und vom Drucksensor 28 ferngehalten werden.

Figur 3 stellt eine vorteilhafte Ausführungsform der Erfindung dar, bei welcher der in Figur 2 erläuterte Aufbau des Ultraschall-Durchflussmessers 10 als Steckfühlereinheit 38 ausgeprägt ist. Die Geometrie ist im wesentlichen derjenigen der in Figur 2 gezeigten Ausführungsform gleich, so dass zur Erläuterung der in Figur 3 eingefügten Bezugszeichen auf die oben angegebene Beschreibung der Figur 2 verwiesen sei. Der in Figur 3 zu sehende erfindungsgemäße Ultraschall-Durchflussmesser ist als Steckfühlereinheit 38 ausgeprägt: Die Steckfühlereinheit 38 hat eine derartige Geometrie, dass sie in eine komplementäre Ausnehmung im Strömungskanal, hier ein Strömungsrohr 40, dichtend oder abgedichtet, quasi als ein Deckel für die Ausnehmung, montiert werden kann. Die Steckfühlereinheit 38 umfasst neben dem bereits angesprochenen kompakten Aufnahmeteil 22 eine Haltekonstruktion 44, welche im eingebauten Zustand in das strömende Fluid im Strömungsrohr 40 hineinragt. Die Haltekonstruktion 44 trägt eine Reflexionsschicht 42, welche die von den Ultraschallwandlern 12,14 ausgesendeten Ultraschallwellenpakete entlang dem Messweg 20 spiegelt.

Die Figur 4 zeigt einen Querschnitt durch das Strömungsrohr 40, in welchem die Variante des erfindungsgemäßen Ultraschall-Durchflussmessers 10 gemäß Figur 3 montiert ist. Zur Erläuterung der eingefügten Bezugszeichen sei auf die oben angegebene Beschreibung der Figur 3 verwiesen.

Bezugszeichenliste

| | |
|---|---|
| 10 | Ultraschall-Durchflussmesser |
| 12 | erster Ultraschallwandler |
| 14 | zweiter Ultraschallwandler |
| 16 | Strömungskanal |
| 18 | Strömungsrichtung |
| 20 | Messweg |
| 22 | kompaktes Aufnahmeteil |
| 24 | Elektronikteil |
| 26 | Schaltungsträger |
| 28 | Drucksensor |
| 30 | Kanal |
| 32 | innerer Bereich |
| 34 | reflektierende Fläche |
| 36 | Rohrinnenwand |
| 38 | Steckfühlereinheit |
| 40 | Strömungsrohr |
| 42 | Reflexionsschicht |
| 44 | Haltekonstruktion |

| | |
|---|---|
| v | Strömungsgeschwindigkeit |
| c | Schallgeschwindigkeit im Fluid |
| L | Weglänge |

**Patentansprüche**

1. Ultraschall-Durchflussmesser (10) mit wenigstens zwei an einem Strömungskanal (16) in Strömungsrichtung versetzt angeordneten Ultraschallwandlern (12,14) zur Aussendung und zum Empfang von Ultraschallwellenpaketen, mit einem Elektronikteil (24) zur Bestimmung von Ultraschalllaufzeiten von einem der Ultraschallwandler (12,14) zum anderen und umgekehrt und mit seinem Drucksensor (26) zur Bestimmung des Druckes im Strömungskanal (16), **dadurch gekennzeichnet, dass** der Ultraschall-Durchflussmesser als Steckfühlereinheit (38) für die Ansaugung eines Kraftfahrzeugverbrennungsmotors ausgeführt ist und die Steckfühlereinheit ein kompaktes Aufnahmeteil (22) aufweist, in dem die wenigstens zwei Ultraschallwandler (12, 14) und der Drucksensor (26) integriert sind, wobei der Drucksensor (26) in einem inneren Bereich (32) des kompakten Aufnahmeteils liegt und der innere Bereich (32) durch einen offenen Anal (28) oder einen mit einer beweglichen Membran verschlossenen Kanal (28) mit dem Strömungskanal (16) verbunden ist.

**2.** Ultraschall-Durchflussmesser (10) gemäß einem der vorstehenden Ansprüche,
**dadurch gekennzeichnet, dass** die wenigstens zwei Ultraschallwandler (12,14) derart angeordnet sind, dass die Ultraschallwellenpakete über wenigstens eine reflektierende Fläche (34) im Strömungskanal (16) vom einen der Ultraschallwandler (12,14) zum anderen und umgekehrt gelangen.

**3.** Ultraschall-Durchflussmesser (10) gemäß Anspruch 2,
**dadurch gekennzeichnet, dass** die reflektierende Fläche (34) ein Teil einer Rohrinnenwand (36) des Strömungskanals (16), eine an der Rohrinnenwand (36) befestigte Reflektionsschicht (42) oder eine Reflecktionsplatte ist.

**4.** Ultraschall-Durchflussmesser (10) gemäß einem der vorstehenden Ansprüche,
**dadurch gekennzeichnet, dass** im Elektronikteil (24) ein den gemessene Druck repräsentierendes elektrisches Signal und ein die Differenz der Ultraschalllaufzeiten elektrisches Signal erzeugbar sind und dass das Elektronikteil eine Multiplikationseinheit zur Verarbeitung des elektrischen Signals des gemessenen Drucks und des elektrischen Signals zu einem näherungsweise den Massenstrom repräsentierenden Signal aufweist

**5.** Ultraschall-Durchflussmesser (10) gemäß einem der vorstehenden Ansprüche,
**dadurch gekennzeichnet, dass** das Elektronikteil (24) einen auf das den Massenstrom repräsentierende Signal wirkenden Tiefpassfilter aufweist.

**6.** Ultraschall-Durchflusamesser (10) gemäß einem der vorstehenden Ansprüche,
**dadurch gekennzeichnet, dass** der Drucksensor (28) und andere Schaltungsbauteile des Elektronikteils (24) des Ultraschall-Durchflussmessers (14) auf einem Schaltungsträger (26) angeordnet sind.

**Claims**

**1.** Ultrasound flow meter (10) having at least two ultrasound transducers (12, 14), which are arranged offset in the flow direction in a flow channel (16), for transmitting and for receiving ultrasound wave packets, having an electronics part (24) for determining ultrasound propagation times from one of the ultrasound transducers (12, 14) to the other, and vice versa, and having a pressure sensor (26) for determining the pressure in the flow channel (16), **characterized in that** the ultrasound flow meter is designed as an insertion-type sensor unit (38) for aspirating a motor vehicle internal combustion engine, and the insertion-type sensor unit has a compact holding means (22) in which the at least two ultrasound transducers (12, 14) and the pressure sensor (26) are integrated, with the pressure sensor (26) being situated in an inner region (32) of the compact holding part and the inner region (32) being connected to the flow channel (16) by an open channel (28) or a channel (28) which is closed by a moving diaphragm.

**2.** Ultrasound flow meter (10) according to Claim 1, **characterized in that** the at least two ultrasound transducers (12, 14) are arranged in such a way that the ultrasound wave packets pass from one of the ultrasound transducers (12, 14) to the other, and vice verse, via at least one reflective area (34) in the flow channel (16).

**3.** Ultrasound flow meter (10) according to Claim 2, **characterized in that** the reflective area (34) is a part of a tube inner wall (36) of the flow channel (16), a reflection layer (42) which is attached to the tube inner wall (36) or a reflection plate.

**4.** Ultrasound flow meter (10) according to one of the preceding claims, **characterized in that** an electrical signal which represents the measured pressure and an electrical signal which represents the difference in the ultrasound propagation times can be generated in the electronics part (24), and **in that** the electronics part has a multiplication unit for processing the electrical signal for the measured pressure and the electrical signal for the difference in the ultrasound propagation times to form a signal which approximately represents the mass flow.

**5.** Ultrasound flow meter (10) according to one of the preceding claims, **characterized in that** the electronics unit (24) has a low-pass filter which acts on the signal which represents the mass flow.

**6.** Ultrasound flow meter (10) according to one of the preceding claims, **characterized in that** the pressure sensor (28) and the other circuit components of the electronics part (24) of the ultrasound flow meter (10) are arranged on a circuit mount (26).

**Revendications**

1. Débitmètre (10) à ultrasons qui présente
   au moins deux convertisseurs d'ultrasons (12, 14) qui sont disposés sur un canal d'écoulement (16) en positions décalées dans la direction d'écoulement et qui émettent et reçoivent des paquets d'ondes ultrasoniques,
   une partie électronique (24) qui détermine les temps de parcours des ultrasons entre un des convertisseurs d'ultrasons (12, 14) et l'autre et inversement et
   une sonde de pression (26) qui détermine la pression dans le canal d'écoulement (16),
   **caractérisé en ce que**
   le débitmètre à ultrasons est configuré sous la forme d'une unité de sonde (38) qui peut être enfichée sur l'admission d'un moteur à combustion interne de véhicule automobile,
   **en ce que** l'unité de sonde enfichable présente une partie compacte de réception (22) dans laquelle les deux ou plusieurs convertisseurs (12, 14) d'ultrasons et la sonde de pression (26) sont intégrés et
   **en ce que** la sonde de pression (26) est située dans une partie intérieure (32) de la partie compacte de réception et la partie intérieure (32) est reliée au canal d'écoulement (16) par un canal ouvert (28) ou par un canal (28) fermé par une membrane mobile.

2. Débitmètre (10) à ultrasons selon la revendication 1, **caractérisé en ce que** les deux ou plusieurs convertisseurs (12, 14) d'ultrasons sont disposés de telle sorte que les paquets d'ondes ultrasoniques passent d'un des convertisseurs (12, 14) d'ultrasons à l'autre et inversement par l'intermédiaire d'au moins une surface réfléchissante (34) prévue dans le canal d'écoulement (16).

3. Débitmètre (10) à ultrasons selon la revendication 2, **caractérisé en ce que** la surface réfléchissante (34) fait partie d'une paroi tubulaire intérieure (36) du canal d'écoulement (16), est une couche réfléchissante (42) fixée sur la paroi intérieure (36) du tube ou est une plaque réfléchissante.

4. Débitmètre (10) à ultrasons selon l'une des revendications précédentes, **caractérisé en ce qu'**un signal électrique qui représente la pression mesurée et un signal électrique qui représente la différence entre les temps de parcours des ultrasons peuvent être formés dans la partie électronique (24) et **en ce que** la partie électronique présente une unité de multiplication qui traite le signal électrique de la pression mesurée et le signal électrique de la différence entre les temps de parcours des ultrasons en un signal qui représente approximativement le débit massique.

5. Débitmètre (10) à ultrasons selon l'une des revendications précédentes, **caractérisé en ce que** la partie électronique (24) présente un filtre passe-bas qui agit sur le signal qui représente le débit massique.

6. Débitmètre (10) à ultrasons selon l'une des revendications précédentes, **caractérisé en ce que** la sonde de pression (28) et d'autres composants du circuit de la partie électronique (24) du débitmètre (10) à ultrasons sont disposés sur un porte-circuit (26).

Fig. 1

Fig. 2

Fig. 3

Fig. 4

**EP 1 831 649 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0477418 A1